# EUROPÄISCHE PATENTSCHRIFT

(11) **EP 1 731 787 B1**
(45) Veröffentlichungstag und Bekanntmachung des Hinweises auf die Patenterteilung: **13.08.2008**
(21) Anmeldenummer: 05012408.0
(22) Anmeldetag: 09.06.2005
(51) Int. Cl.: F16D 35/02

(54) **Flüssigkeitsreibungskupplung**
Fluid friction clutch
Accouplement à fluide visqueux

(43) Veröffentlichungstag der Anmeldung: 13.12.2006
(73) Patentinhaber: BorgWarner Inc., Auburn Hills, MI 48326-2872 (US)
(72) Erfinder: Buchholz, Thomas, 78333 Stockach (DE)
(74) Vertreter: Wolf, Eckhard

(56) Entgegenhaltungen:
- EP-A- 0 936 371
- DE-A1- 19 749 342
- US-A- 6 026 943

## Beschreibung

Die Erfindung betrifft eine Flüssigkeitsreibungskupplung mit einem Gehäuse und einer gegenüber dem Gehäuse drehbar angeordneten Kupplungsscheibe, die drehfest an einem Ende einer zentral innerhalb des Gehäuses gelagerten Welle angeordnet ist, die an ihrem anderen Ende ein von der Kupplung anzutreibendes Wirkorgan trägt, wobei zwischen dem Gehäuse und der Kupplungsscheibe eine mit Kupplungsflüssigkeit beaufschlagbare Arbeitskammer gebildet ist, mit einer in dem Gehäuse ausgebildeten Vorratskammer für die Kupplungsflüssigkeit und einem von dieser zur Arbeitskammer führenden Zuführkanal sowie mit einem Rückpumpsystem zur Rückführung der Kupplungsflüssigkeit von der Arbeitskammer zur Vorratskammer, wobei in dem Zuführkanal eine Ventilanordnung zur Steuerung der der Arbeitskammer zugeführten Kupplungsflüssigkeit angeordnet ist.

Bei einer derartigen Kupplung hängt die Drehmomentübertragung von der Menge der sich in der Arbeitskammer befindlichen Kupplungsflüssigkeit ab. Befindet sich wenig Flüssigkeit in der Arbeitskammer, so findet ein vergleichsweise großer Schlupf zwischen Primär- und Sekundärseite statt, der mit zunehmender Füllung der Arbeitskammer abnimmt. Entsprechend verändert sich die Drehzahl des Wirkorgans. Um eine konstante Drehzahl, also einen stabilen Arbeitspunkt, der Sekundärseite zu gewährleisten, müssen die relativen Volumenströmen der Kupplungsflüssigkeit in die und aus der Arbeitskammer stets gleich sein, unabhängig von der Drehzahl der Primärseite. Die Gestaltung des Pumpsystems für die Kupplungsflüssigkeit hat somit einen entscheidenden Einfluss auf die Betriebsstabilität der Kupplung.

Bei einer aus der US-6,026,943 bekannten Kupplung der eingangs genannten Art ist in der Arbeitskammer zwischen der Primärseite und der Sekundärseite ein Abstreiforgan angeordnet, das Teil einer Staudruckpumpe ist.

Der Zustrom der Kupplungsflüssigkeit in die Arbeitskammer wird durch ein in der Zuführleitung angeordnetes Ventil gesteuert. Sobald Kupplungsflüssigkeit in die Arbeitskammer gelangt, wird die Sekundärseite mitgenommen und es verringert sich daher die Relativgeschwindigkeit zwischen Primär- und Sekundärseite. Dies hat zur Folge, dass der Staudruck am Abstreiforgan abnimmt und sich die Wirksamkeit der Pumpe verringert. Nun kann eine Rückkopplung von äußeren Einwirkungen auf das sekundärseitige Wirkorgan dazu führen, dass je nach Art der Einwirkung die Drehzahl der Sekundärseite bei unveränderter Drehzahl der Primärseite zunimmt oder abnimmt, wodurch sich die Relativgeschwindigkeit und damit der Staudruck am Abstreiforgan entsprechend verändert. Bei dieser bekannten Kupplung führt dies zu einer Drift weg vom Arbeitspunkt, die Drehmomentübertragung ist instabil.

Aus der EP 0 936 371 A1 ist eine weitere Kupplung der eingangs genannten Art bekannt. Bei dieser Kupplung ist zusätzlich das Gehäuse mit einem Antriebsorgan verbunden, drehbar gegenüber einem stationären Kupplungsteil angeordnet und es bildet die Primärseite der Kupplung, wobei beim Umlauf des angetriebenen Gehäuses Kupplungsflüssigkeit von der Vorratskammer durch den von dieser aus im Wesentlichen radial nach außen verlaufenden Zuführkanal zu der Arbeitskammer strömt und wobei zwischen dem Gehäuse und dem Außenrand der Kupplungsscheibe ein radialer Spalt gebildet ist. Eine Wasserkühlung der Kupplung soll dazu führen, dass diese bei gleichem Drehmomentübertragungsvermögen kompakter gestaltet werden bzw. bei einer gegebenen Baugröße mehr Drehmoment übertragen kann. Das Erreichen eines stabilen Arbeitspunkts, also einer sekundärseitig konstanten Drehzahl, ist nicht Gegenstand dieser Anmeldung.

Ausgehend hiervon besteht die Aufgabe der vorliegenden Erfindung darin, eine Flüssigkeitsreibungskupplung der eingangs genannten bereitzustellen, mit der eine vorgegebene Solldrehzahl unter allen Umständen stabil eingehalten werden kann.

Zur Lösung dieser Aufgabe wird die in dem Patentanspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung ist vorgesehen, dass das Gehäuse mit einem Antriebsorgan verbunden ist, drehbar gegenüber einem stationären Kupplungsteil angeordnet ist und die Primärseite der Kupplung bildet, wobei beim Umlauf des angetriebenen Gehäuses Kupplungsflüssigkeit von der Vorratskammer durch den von dieser aus im Wesentlichen radial nach außen verlaufenden Zuführkanal zu der Arbeitskammer strömt, dass zwischen dem Gehäuse und dem Außenrand der Kupplungsscheibe ein radialer Spalt gebildet ist und dass das Rückpumpsystem ein auf der der Arbeitskammer abgewandten Seite der Kupplungsscheibe an dem stationären Kupplungsteil angeordnetes Abstreiforgan für die Kupplungsflüssigkeit umfasst, das einen mit der Vorratskammer kommunizierenden Kanal aufweist. Durch diese Maßnahmen wird erreicht, dass der Staudruck und damit die Pumpleistung beim Rückpumpen der Kupplungsflüssigkeit nicht von der Relativgeschwindigkeit von Primär- und Sekundärseite beeinflusst wird. Der Kupplungsgrad ist somit unter allen Umständen stabil und es findet keine Drift von einem Sollwert statt.

Zweckmäßig weist das Gehäuse einen die Kupplungsscheibe axial und radial übergreifenden Deckel auf. Dies erleichtert den Zusammenbau der Kupplung und ermöglicht den Zugang bei Wartungs- oder Reparaturarbeiten.

In bevorzugter Ausgestaltung der Erfindung weist das Abstreiforgan in seinem radial äußeren Bereich eine Staukante oder -wand für die Kupplungsflüssigkeit auf, an der der mit der Vorratskammer kommunizierende Kanal mündet.

Das Antriebsorgan für das Gehäuse ist vorteilhaft als Riemenscheibe ausgebildet, die mit dem Gehäuse verbunden, vorzugsweise verschraubt ist.

Die einander mit Abstand gegenüberliegenden, radial äußeren Bereiche des Deckels und der Kupplungsscheibe weisen vorteilhaft ineinander greifende Profilierungen auf und die Arbeitskammer ist im Wesentlichen durch die profilierten Bereiche des Gehäuses und der Kupplungsscheibe begrenzt. Hierdurch wird ein mäander- oder zick-zack-förmiger Strömungspfad für die Kupplungsflüssigkeit gebildet, wodurch die effektive Fläche der Arbeitskammer vergrößert und eine bessere Drehmomentübertragung erreicht wird. Zur Steuerung der in die Arbeitskammer eintretende Menge an Kupplungsflüssigkeit umfasst die in dem Zuführkanal angeordnete Ventilanordnung vorteilhaft ein elektromagnetisches Proportionalventil. Dieses Ventil kann einen Ventilkörper aufweisen, der über eine achskonzentrische, an dem stationären Kupplungsteil angeordnete Ringspule betätigbar ist.

In weiterer Ausgestaltung der Erfindung weist der stationäre Kupplungsteil einen Flansch und eine sich von diesem aus axial erstreckende hohlzylindrische Partie auf, wobei die die Kupplungsscheibe und das Wirkorgan tragende Welle die hohlzylindrische Partie durchsetzt und in dieser drehbar gelagert ist, vorzugsweise mittels mindestens eines Wälzlagers. Weiterhin weist das Gehäuse zweckmäßig eine zentrale Durchtrittsöffnung auf, die von der hohlzylindrischen Partie durchsetzt wird, und das Gehäuse ist auf der hohlzylindrischen Partie drehbar gelagert, vorzugsweise ebenfalls mittels mindestens eines Wälzlagers.

Das Wirkorgan kann als Lüfterrad eines Kühlerlüfters, als Wasserpumpenrad, als Ölpumpenrad, als Generatorläufer oder als Kompressorläufer ausgebildet sein.

Eine bevorzugte Verwendung der erfindungsgemäßen Kupplung findet in einem Nebenaggregat eines Motors, vorzugsweise einer Verbrennungskraftmaschine statt, insbesondere in einem Kühlerlüfter, einem Generator, einer Wasserpumpe, einer Ölpumpe, einem Klimakompressor oder dergleichen.

Im Folgenden wird die Erfindung anhand eines in der Zeichnung schematisch dargestellten Ausführungsbeispiels näher erläutert. Es zeigen
- Fig. 1: eine teilweise geschnittene Seitenansicht einer Flüssigkeitsreibungskupplung;
- Fig. 2: die Kupplung gemäß Fig. 1 in teilweise geschnittener Draufsicht; und
- Fig. 3: eine perspektivische Ansicht eines auf der Rückseite der Kupplungsscheibe angeordneten Abstreiforgans für Kupplungsflüssigkeit.

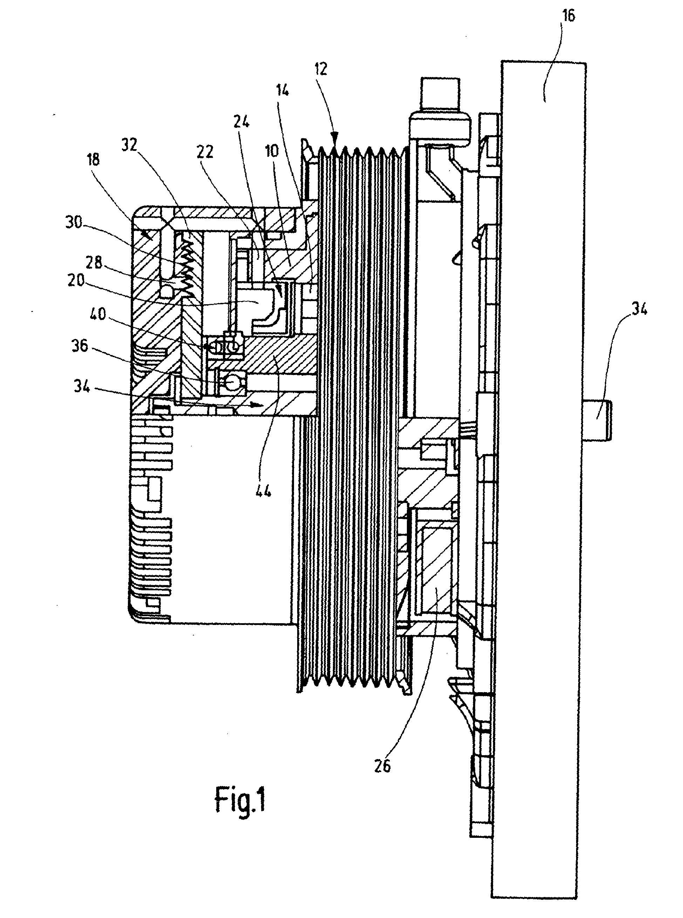

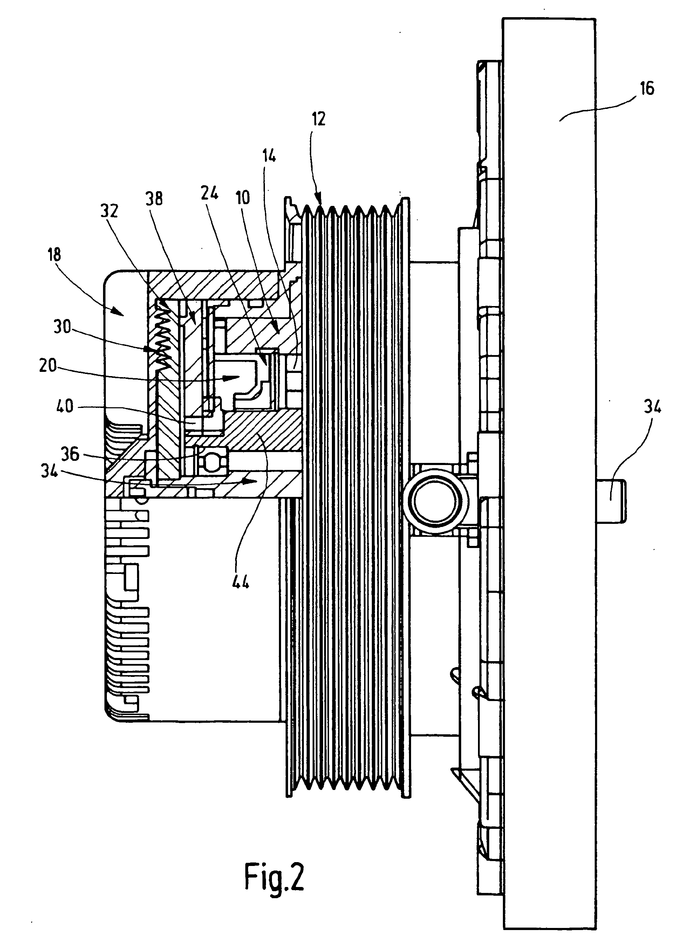

Die in den Fig. 1 und 2 dargestellte Kupplung weist ein Gehäuse mit einem Gehäusekörper 10 und einem Gehäusedeckel 18 auf. Der Gehäusekörper 10 trägt eine Antriebsscheibe 12, die über einen nicht dargestellten Polyriemen angetrieben wird. Das Gehäuse ist mittels eines Lagers 14 drehbar auf einem stationären Kupplungsteil 16 angeordnet, das beispielsweise an einem Motorblock befestigt ist. Der Deckel 18 übergreift den Gehäusekörper 10 radial und partiell axial und ist an diesem befestigt, beispielsweise verschraubt. In dem Gehäuse befindet sich weiterhin eine Vorratskammer 20 für Kupplungsflüssigkeit, beispielsweise Silikonöl. Die Vorratskammer steht mit einem radial nach außen führenden Zuführkanal 22 in Verbindung, wobei der Durchtrittsquerschnitt zu dem Zuführkanal mittels eines Ventilkörpers 24 verändert werden kann. Der Ventilkörper 24 ist Teil einer elektromagnetischen Ventilanordnung und wird über eine an dem stationären Kupplungsteil 16 angeordnete, eine hohlzylindrische Partie 44 des stationären Kupplungsteils 16 konzentrisch umschließende Ringspule 26 angesteuert. Der Zuführkanal 22 erstreckt sich weiter zunächst axial und dann radial nach innen durch den Deckel 18, wo er über eine Versorgungsöffnung 28 in den Arbeitsraum 30 mündet. Der Arbeitsraum 30 ist durch einen mit einem Sägezahnprofil versehenen, radial äußeren Bereich des Deckels 18 einerseits und einen diesem gegenüberliegend angeordneten, ein komplementäres Profil aufweisenden Bereich einer Kupplungsscheibe 32 gebildet. Die Kupplungsscheibe 32 sitzt auf einer Welle 34 und ist mittels zweier Lager, von denen nur das eine Lager 36 dargestellt ist, in einer zentralen Öffnung des stationären Kupplungsteils 16 drehbar gelagert. Auf dem freien Ende der Welle 34 sitzt ein nicht näher dargestelltes Wirkorgan, das beispielsweise ein Wasser- oder Ölpumpenrad sein kann.

Zwischen dem Außenrand der Kupplungsscheibe 32 und dem Deckel 18 verbleibt ein Spalt, durch den die Kupplungsflüssigkeit hindurchtreten kann. Auf der Rückseite der Kupplungsscheibe 32 ist ein an dem stationären Kupplungsteil angeordnetes Abstreiforgan 38 vorgesehen, an dem sich die durch den Spalt hindurchtretende Kupplungsflüssigkeit staut. Das Abstreiforgan 38 weist einen radial verlaufenden, mit der Vorratskammer 20 kommunizierenden Kanal 40 auf, über den die Kupplungsflüssigkeit zurück in die Vorratskammer gelangt.

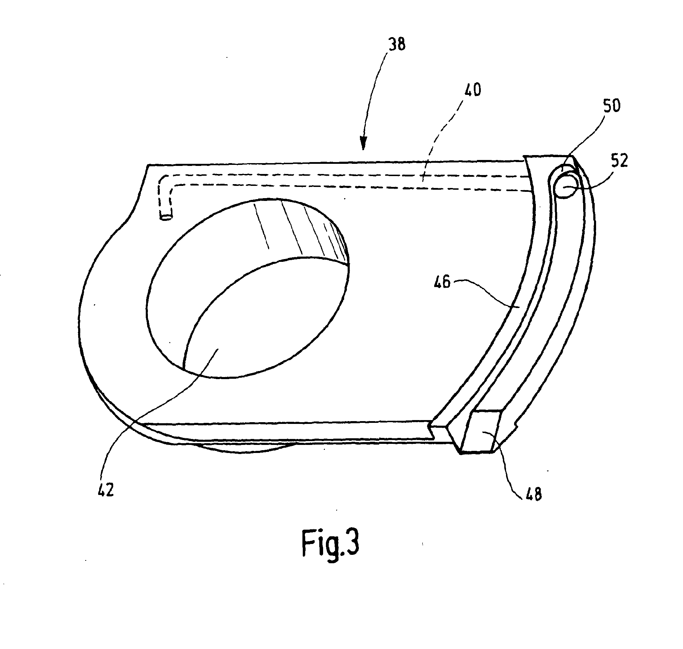

Fig. 3 zeigt eine perspektivische Ansicht der der Kupplungsscheibe 32 zugewandten Seite des Abstreiforgans 38. Das Abstreiforgan weist eine annähernd plattenförmige Gestalt mit einer Durchtrittsöffnung 42 für die hohlzylindrische Partie 44 (Fig. 1 und 2) des stationären Kupplungsteils 16 auf. Das Abstreiforgan 38 erstreckt sich radial bis zum Deckel 18, ohne jedoch an diesem anzuliegen, so dass sich der Deckel 18 zusammen mit dem Gehäusekörper 10 frei gegenüber dem Abstreiforgan 38 drehen kann. Im Abstand von seiner Außenkante weist das Abstreiforgan 38 einen Steg 46 auf, der zusammen mit der Kupplungsscheibe 32 und der Innenwandung des Deckels 18 einen Kanal für die Kupplungsflüssigkeit bildet. Die Eintrittsöffnung dieses Kanals ist durch eine Schrägfläche 48 vergrößert, während der Steg 46 am Ende des Kanals eine Staukante 50 bildet. Hier befindet sich eine Eintrittsöffnung 52 zu dem durch das Innere des Abstreiforgans verlaufenden Kanal 40, der an seinem anderen Ende in die Vorratskammer 20 mündet.

Im Betrieb der Kupplung wird das Gehäuse 10, 18 über die Antriebsscheibe in Rotation versetzt. Auf die sich in der Vorratskammer befindende Kupplungsflüssigkeit wirkt eine Zentrifugalkraft, die die Flüssigkeit bei entsprechender Öffnungsstellung des Ventilkörpers 24 in den Zuführkanal 22 drängt. Die Flüssigkeit strömt durch den Kanal im Deckel 18 und tritt über die Versorgungsöffnung 28 in die Arbeitskammer 30 ein. In der Flüssigkeit wirken Scherkräfte, die für eine Mitnahme der Kupplungsscheibe 32 sorgen, wodurch das auf der gemeinsamen Achse 34 sitzende Wirkorgan ebenfalls in Rotation versetzt wird. Da auch in der Arbeitskammer eine Zentrifugalkraft auf die Flüssigkeit wirkt, strömt diese durch den radialen Spalt zwischen der Kupplungsscheibe 32 und dem Deckel 18 zur Rückseite der Kupplungsscheibe 32, wo sie sich an dem Kanal des Abstreiforgans 38 staut und über dessen Kanal zurück in die Vorratskammer 20 strömt. Der Flüssigkeitskreislauf ist damit geschlossen.

Da sich das Abstreiforgan 38 gegenüber der Kupplungsscheibe 32 in Ruhe befindet, nimmt mit steigender Drehzahl der Kupplungsscheibe 32 der Staudruck an dem Abstreiforgan 38 und damit dessen Pumpleistung zu. Bei entsprechender Gestaltung kann das Abstreiforgan 38 grundsätzlich auch schwimmend gelagert sein und sich in dem Gehäuse 10, 18 drehen. Für den Eintritt der erfindungsgemäßen Wirkung ist in jedem Fall ausschlaggebend, dass zwischen dem Abstreiforgan 38 und der Kupplungsscheibe 32 ein erheblicher Drehzahlunterschied besteht, der für einen steigenden Staudruck bei steigender Drehzahl der Kupplungsscheibe 32 sorgt.

Der proportional zur Drehzahl der Kupplungsscheibe erzeugte Staudruck ist damit eine Regelgröße, die stabilisierend auf das System wirkt. Wenn über eine Veränderung des Zuflusses an Kupplungsflüssigkeit in die Arbeitskammer 20 eine Drehzahländerung des Wirkorgans eingeleitet werden soll, beispielsweise eine Reduktion der Drehzahl, indem über das Ventil der Zufluss vermindert wird, so wird über die noch mit höherer Geschwindigkeit rotierende Kupplungsscheibe 32 ein hoher Staudruck am Abstreiforgan 38 und damit eine hohe Rückführrate der Flüssigkeit in die Vorratskammer 20 bewirkt, so dass die Menge der Flüssigkeit in der Arbeitskammer 30 rasch abnimmt und die auf die Kupplungsscheibe übertragene Antriebskraft entsprechend sinkt. Die Kupplung kann somit schnell auf Ansteuerungen reagieren.

Zusammenfassend ist folgendes festzuhalten: Die Erfindung betrifft eine Flüssigkeitsreibungskupplung mit einem Gehäuse 10, 18 und einer gegenüber dem Gehäuse 10 drehbar angeordneten Kupplungsscheibe 32, die drehfest an einem Ende einer zentral innerhalb des Gehäuses gelagerten Welle 34 angeordnet ist, die an ihrem anderen Ende ein von der Kupplung anzutreibendes Wirkorgan trägt, wobei zwischen dem Gehäuse 10, 18 und der Kupplungsscheibe 32 eine mit Kupplungsflüssigkeit beaufschlagbare Arbeitskammer 30 gebildet ist, mit einer in dem Gehäuse 10, 18 ausgebildeten Vorratskammer 20 für die Kupplungsflüssigkeit und einem von dieser zur Arbeitskammer 30 führenden Zuführkanal 22 sowie mit einem Rückpumpsystem zur Rückführung der Kupplungsflüssigkeit von der Arbeitskammer 30 zur Vorratskammer 20, wobei in dem Zuführkanal 22 eine Ventilanordnung zur Steuerung der der Arbeitskammer 30 zugeführten Kupplungsflüssigkeit angeordnet ist. Um eine vorgegebene Solldrehzahl unter allen Umständen stabil einhalten zu können, wird gemäß der Erfindung vorgeschlagen, dass das Gehäuse 10, 18 mit einem Antriebsorgan 12 verbunden ist, drehbar gegenüber einem stationären Kupplungsteil 16 angeordnet ist und die Primärseite der Kupplung bildet, wobei beim Umlauf des angetriebenen Gehäuses 10, 18 Kupplungsflüssigkeit von der Vorratskammer 20 durch den von dieser aus im Wesentlichen radial nach außen verlaufenden Zuführkanal 22 zu der Arbeitskammer 30 strömt, dass zwischen dem Gehäuse 10, 18 und dem Außenrand der Kupplungsscheibe 32 ein radialer Spalt gebildet ist und dass das Rückpumpsystem ein auf der der Arbeitskammer 30 abgewandten Seite der Kupplungsscheibe 32 an dem stationären Kupplungsteil 16 angeordnetes Abstreiforgan 38 für die Kupplungsflüssigkeit umfasst, das einen mit der Vorratskammer 20 kommunizierenden Kanal 40 aufweist.

## Patentansprüche

1. Flüssigkeitsreibungskupplung mit einem Gehäuse (10, 18) und einer gegenüber dem Gehäuse (10, 18) drehbar angeordneten Kupplungsscheibe (32), die drehfest an einem Ende einer zentral innerhalb des Gehäuses gelagerten Welle (34) angeordnet ist, die an ihrem anderen Ende ein von der Kupplung anzutreibendes Wirkorgan trägt, wobei zwischen dem Gehäuse (10, 18) und der Kupplungsscheibe (32) eine mit Kupplungsflüssigkeit beaufschlagbare Arbeitskammer (30) gebildet ist, mit einer in dem Gehäuse (10, 18) ausgebildeten Vorratskammer (20) für die Kupplungsflüssigkeit und einem von dieser zur Arbeitskammer (30) führenden Zuführkanal (22) sowie mit einem Rückpumpsystem zur Rückführung der Kupplungsflüssigkeit von der Arbeitskammer (30) zur Vorratskammer (20), wobei in dem Zuführkanal (22) eine Ventilanordnung zur Steuerung der der Arbeitskammer (30) zugeführten Kupplungsflüssigkeit angeordnet ist, wobei das Gehäuse (10, 18) mit einem Antriebsorgan (12) verbunden ist, drehbar gegenüber einem stationären Kupplungsteil (16) angeordnet ist und die Primärseite der Kupplung bildet, wobei beim Umlauf des angetriebenen Gehäuses (10, 18) Kupplungsflüssigkeit von der Vorratskammer (20) durch den von dieser aus im Wesentlichen radial nach außen verlaufenden Zuführkanal (22) zu der Arbeitskammer (30) strömt, wobei zwischen dem Gehäuse (10, 18) und dem Außenrand der Kupplungsscheibe (32) ein radialer Spalt gebildet ist und wobei das Rückpumpsystem ein auf der der Arbeitskammer (30) abgewandten Seite der Kupplungsscheibe (32) an dem stationären Kupplungsteil (16) angeordnetes Abstreiforgan (38) für die Kupplungsflüssigkeit umfasst, das einen mit der Vorratskammer (20) kommunizierenden Kanal (40) aufweist.

2. Kupplung nach Anspruch 1, **dadurch gekennzeichnet, dass** das Gehäuse einen Gehäusekörper (10) und einen die Kupplungsscheibe (32) axial und radial übergreifenden Deckel (18) aufweist.

3. Kupplung nach Anspruch 1 oder 2, **dadurch gekennzeichnet, dass** das Abstreiforgan (38) in seinem radial äußeren Bereich eine Staukante oder -wand (46) für die Kupplungsflüssigkeit aufweist, an der der mit der Vorratskammer (20) kommunizierende Kanal (40) mündet.

4. Kupplung nach einem der Ansprüche 1 bis 3, **dadurch gekennzeichnet, dass** das Antriebsorgan für das Gehäuse (10, 18) als Riemenscheibe (12) ausgebildet ist.

5. Kupplung nach Anspruch 4, **dadurch gekennzeichnet, dass** die Riemenscheibe (12) mit dem Gehäuse (10, 18) verbunden, vorzugsweise verschraubt ist.

6. Kupplung nach einem der Ansprüche 1 bis 5, **dadurch gekennzeichnet, dass** die einander mit Abstand gegenüberliegenden, radial äußeren Bereiche des Deckels (18) und der Kupplungsscheibe (32) ineinander greifende Profilierungen aufweisen.

7. Kupplung nach Anspruch 6, **dadurch gekennzeichnet, dass** die Arbeitskammer (30) im Wesentlichen durch die profilierten Bereiche des Deckels (18) und der Kupplungsscheibe (32) begrenzt ist.

8. Kupplung nach einem der Ansprüche 1 bis 7, **dadurch gekennzeichnet, dass** die in dem Zuführkanal (22) angeordnete Ventilanordnung ein elektromagnetisches Proportionalventil (24) umfasst.

9. Kupplung nach Anspruch 8, **dadurch gekennzeichnet, dass** das Ventil einen Ventilkörper (24) aufweist, der über eine achskonzentrische, an dem stationären Kupplungsteil (16) angeordnete Ringspule (26) betätigbar ist.

10. Kupplung nach einem der Ansprüche 1 bis 9, **dadurch gekennzeichnet, dass** der stationäre Kupplungsteil (16) einen Flansch und eine sich von diesem aus axial erstreckende hohlzylindrische Partie (44) aufweist.

11. Kupplung nach Anspruch 10, **dadurch gekennzeichnet, dass** die die Kupplungsscheibe (32) und das Wirkorgan tragende Welle (34) die hohlzylindrische Partie (44) durchsetzt und in dieser drehbar gelagert ist, vorzugsweise mittels mindestens eines Wälzlagers (36).

12. Kupplung nach Anspruch 10 oder 11, **dadurch gekennzeichnet, dass** das Gehäuse (10) eine zentrale Durchtrittsöffnung aufweist, die von der hohlzylindrischen Partie (44) durchsetzt wird, und dass das Gehäuse auf der hohlzylindrischen Partie drehbar gelagert ist, vorzugsweise mittels mindestens eines Wälzlagers (14).

13. Kupplung nach einem der Ansprüche 1 bis 12, **dadurch gekennzeichnet, dass** das Wirkorgan als Lüfterrad eines Kühlerlüfters, als Wasserpumpenrad, als Ölpumpenrad, als Generatorläufer oder als Kompressorläufer ausgebildet ist.

14. Verwendung einer Kupplung nach einem der Ansprüche 1 bis 13 in einem Nebenaggregat eines Motors, vorzugsweise einer Verbrennungskraftmaschine, insbesondere in einem Kühlerlüfter, einem Generator, einer Wasserpumpe, einer Ölpumpe, einem Klimakompressor oder dergleichen.

## Claims

1. Liquid friction clutch having a housing (10, 18) and having a clutch disc (32) which is arranged so as to be rotatable relative to the housing (10, 18) and which is rotationally fixedly arranged on one end of a shaft (34) which is mounted centrally within the housing, which shaft (34), at its other end, supports an active element which is to be driven by the clutch, with a working chamber (30), which can be filled with clutch liquid, being formed between the housing (10, 18) and the clutch disc (32), having a storage chamber (20), which is formed in the housing (10, 18), for the clutch liquid and having a supply duct (22) which leads from said storage chamber (20) to the working chamber (30), and having a return pump system for returning the clutch liquid from the working chamber (30) to the storage chamber (20), with a valve arrangement for controlling the clutch liquid supplied to the working chamber (30) being arranged in the supply duct (22), with the housing (10, 18) being connected to a drive element (12), being arranged so as to be rotatable with respect to a stationary clutch part (16) and forming the primary side of the clutch, with clutch liquid flowing from the storage chamber (20) through the supply duct (22), which runs substantially radially outward from said storage chamber (20), to the working chamber (30) when the driven housing (10, 18) rotates, with a radial gap being formed between the housing (10, 18) and the outer edge of the clutch disc (32), and with the return pumping system comprising a scraper element (38), which is arranged on the stationary clutch part (16) on that side of the clutch disc (32) which faces away from the working chamber (30), for the clutch liquid, which scraper element (38) has a duct (40) which communicates with the storage chamber (20).

2. Clutch according to Claim 1, **characterized in that** the housing has a housing body (10) and a cover (18) which engages axially and radially over the clutch disc (32).

3. Clutch according to Claim 1 or 2, **characterized in that** the scraper element (38) has, in its radially outer region, a build-up edge or wall (46) for the clutch liquid, at which build-up edge or wall (46) the duct (40) which communicates with the storage chamber (20) opens out.

4. Clutch according to one of Claims 1 to 3, **characterized in that** the drive element for the housing (10, 18) is embodied as a pulley (12).

5. Clutch according to Claim 4, **characterized in that** the pulley (12) is connected, preferably screwed, to the housing (10, 18).

6. Clutch according to one of Claims 1 to 5, **characterized in that** the radially outer regions of the cover (18) and of the clutch disc (32) which are situated opposite one another with a spacing have profilings which engage into one another.

7. Clutch according to Claim 6, **characterized in that** the working chamber (30) is delimited substantially by the profiled regions of the cover (18) and of the clutch disc (32).

8. Clutch according to one of Claims 1 to 7, **characterized in that** the valve arrangement which is arranged in the supply duct (22) comprises an electromagnetic proportional valve (24).

9. Clutch according to Claim 8, **characterized in that** the valve has a valve body (24) which can be actuated by means of an axially concentric annular coil (26) which is arranged on the stationary clutch part (16).

10. Clutch according to one of Claims 1 to 9, **characterized in that** the stationary clutch part (16) has a flange and a hollow cylindrical section (44) which extends axially from said flange.

11. Clutch according to Claim 10, **characterized in that** the shaft (34) which supports the clutch disc (32) and the active element extends through the hollow cylindrical section (44) and is rotatably mounted in the latter, preferably by means of at least one rolling bearing (36).

12. Clutch according to Claim 10 or 11, **characterized in that** the housing (10) has a central passage opening through which the hollow cylindrical section (44) extends, and **in that** the housing is rotatably mounted on the hollow cylindrical section, preferably by means of at least one rolling bearing (14).

13. Clutch according to one of Claims 1 to 12, **characterized in that** the active element is embodied as a fan wheel of a cooler fan, as a water pump wheel, as an oil pump wheel, as a generator rotor or as a compressor rotor.

14. Use of a clutch according to one of Claims 1 to 13 in an auxiliary unit of an engine, preferably of an internal combustion engine, in particular in a cooler fan, a generator, a water pump, an oil pump, an air-conditioning compressor or the like.

## Revendications

1. Embrayage à frottement visqueux comprenant un boîtier (10, 18) et un disque d'embrayage (32) disposé à rotation par rapport au boîtier (10, 18), qui est disposé de manière solidaire en rotation à une extrémité d'un arbre (34) monté centralement à l'intérieur du boîtier, qui porte, à son autre extrémité, un organe fonctionnel devant être entraîné par l'embrayage, une chambre de travail (30) pouvant être sollicitée avec du fluide d'embrayage étant formée entre le boîtier (10, 18) et le disque d'embrayage (32), avec une chambre de stockage (20) réalisée dans le boîtier (10, 18) pour le fluide d'embrayage et un canal d'amenée (22) conduisant de celle-ci à la chambre de travail, ainsi qu'avec un système de pompage de retour pour ramener le fluide d'embrayage de la chambre de travail (30) dans la chambre de stockage (20), un agencement de soupape étant disposé dans le canal d'amenée (22) pour la commande du fluide d'embrayage acheminé à la chambre de travail (30), le boîtier (10, 18) étant connecté à un organe d'entraînement (12), étant disposé à rotation par rapport à une partie d'embrayage stationnaire (16) et formant le côté primaire de l'embrayage, du fluide d'embrayage, lors de sa circulation autour du boîtier entraîné (10, 18), s'écoulant depuis la chambre de stockage (20) à travers le canal d'amenée (22) s'étendant depuis celle-ci essentiellement radialement vers l'extérieur jusqu'à la chambre de travail (30), une fente radiale étant formée entre le boîtier (10, 18) et le bord extérieur du disque d'embrayage (32), et le système de pompage de retour comprenant du côté du disque d'embrayage (32) opposé à la chambre de travail (30), un organe de raclage (38) pour le fluide d'embrayage, disposé sur la partie d'embrayage stationnaire (16), qui présente un canal (40) communiquant avec la chambre de stockage (20).

2. Embrayage selon la revendication 1, **caractérisé en ce que** le boîtier présente un corps de boîtier (10) et un couvercle (18) venant en prise axialement et radialement par-dessus le disque d'embrayage (32).

3. Embrayage selon la revendication 1 ou 2, **caractérisé en ce que** l'organe de raclage (38) présente, dans sa région radialement extérieure, une arête ou une paroi de barrage (46) pour le fluide d'embrayage, au niveau de laquelle débouche le canal (40) communiquant avec la chambre de stockage (20).

4. Embrayage selon l'une quelconque des revendications 1 à 3, **caractérisé en ce que** l'organe d'entraînement pour le boîtier (10, 18) est réalisé sous la forme d'une poulie à courroie (12).

5. Embrayage selon la revendication 4, **caractérisé en ce que** la poulie à courroie (12) est connectée au boîtier (10, 18), de préférence par vissage.

6. Embrayage selon l'une quelconque des revendications 1 à 5, **caractérisé en ce que** les régions du couvercle (18) et du disque d'embrayage (32) radialement extérieures et opposées à distance l'une de l'autre présentent des profilages venant en prise l'un dans l'autre.

7. Embrayage selon la revendication 6, **caractérisé en ce que** la chambre de travail (30) est essentiellement limitée par les régions profilées du couvercle (18) et du disque d'embrayage (32).

8. Embrayage selon l'une quelconque des revendications 1 à 7, **caractérisé en ce que** l'agencement de soupape disposé dans le canal d'amenée (22) comprend une soupape proportionnelle électromagnétique (24).

9. Embrayage selon la revendication 8, **caractérisé en ce que** la soupape présente un corps de soupape (24), qui peut être commandé par le biais d'une bobine toroïdale (26) disposée sur la partie d'embrayage stationnaire (16) et concentrique par rapport à l'axe.

10. Embrayage selon l'une quelconque des revendications 1 à 9, **caractérisé en ce que** la partie d'embrayage stationnaire (16) présente une bride et une partie cylindrique creuse (44) s'étendant axialement depuis celle-ci.

11. Embrayage selon la revendication 10, **caractérisé en ce que** l'arbre (34) portant le disque d'embrayage (32) et l'organe fonctionnel traverse la partie cylindrique creuse (44) et est monté à rotation dans celle-ci, de préférence au moyen d'au moins un palier à roulement (36).

12. Embrayage selon la revendication 10 ou 11, **caractérisé en ce que** le boîtier (10) présente une ouverture de passage centrale qui est traversée par la partie cylindrique creuse (44), et **en ce que** le boîtier est monté à rotation sur la partie cylindrique creuse, de préférence au moyen d'au moins un palier à roulement (14).

13. Embrayage selon l'une quelconque des revendications 1 à 12, **caractérisé en ce que** l'organe fonctionnel est réalisé sous la forme d'une roue de ventilateur de radiateur, d'une roue de pompe à eau, d'une roue de pompe à huile, d'un rotor de générateur ou d'un rotor de compresseur.

14. Utilisation d'un embrayage selon l'une quelconque des revendications 1 à 13 dans une unité auxiliaire d'un moteur, de préférence d'un moteur à combustion interne, notamment dans un ventilateur de radiateur, un générateur, une pompe à eau, une pompe à huile, un compresseur de climatisation ou similaire.
